# EUROPEAN PATENT SPECIFICATION

(11) **EP 0 824 575 B1**
(45) Date of publication and mention of the grant of the patent: **31.03.1999**
(21) Application number: 96915109.1
(22) Date of filing: 02.05.1996
(51) Int. Cl.: C09K 3/18, E01H 13/00

(54) **ENVIRONMENTALLY SAFE SNOW AND ICE DISSOLVING LIQUID**
UMWELTFREUNDLICHE SCHNEE- UND EISBESEITIGUNGSFLÜSSIGKEIT
LIQUIDE NON POLLUANT DISSOLVANT LA NEIGE ET LA GLACE

(30) Priority: 03.05.1995 HU 9501266
(43) Date of publication of application: 25.02.1998
(73) Proprietor: Kerti, Jozsef, 1119 Budapest (HU); Kardos, Péter, 1065 Budapest (HU); Kalman, Tibor, 1126 Budapest (HU)
(72) Inventor: Kerti, Jozsef, 1119 Budapest (HU); Kardos, Péter, 1065 Budapest (HU); Kalman, Tibor, 1126 Budapest (HU)
(74) Representative: Sandmair, Kurt, Dr. Dr.
(86) International application number: PCT/HU96/00025
(87) International publication number: WO 96/34927

(56) References cited:
- GB-A- 1 070 169
- US-A- 3 595 477
- US-A- 3 630 913
- US-A- 3 806 348
- US-A- 3 940 059

## Description

The subject of the invention is a speedy acting, biosphere and concrete saving glycol-free liquid serving for slipperiness alleviation on public roads, airport runways, railway switches and other objects as well as for doing away with their breakdown deriving from crusty snow and ice, applying liquid nitrogen-fertilizer compounds.

### Background Art

One of the fundamental conditions of the safe transport in winter is the doing away with the slipperiness (= skid-proofness) for pedestrians and vehicles alike. A futher requirement is the railway switches' saving from snow and ice, since the breakdown owing to these precipitates results in an imminent life-danger.

The bulk of the deposit is generally removed from the surface by mechanical means (shovelling, scooping, sweeping). However, this does not do away with the slipperiness satisfactorily because it is due first of all to the ice film adhering to the surface. On this account, the mechanical means are generally combined with heat transfer or chemicals' strewing.

The heat transfer can be implemented among others by steam sprayer, i.e. by blowing hot steam onto the surface, e.g. airport runway. This method, beside being expensive, is accident-hazardous and the heat-shock is damaging for the concrete as well. In addition, putting an end to the heat transfer, the ice film is quickly renewed under the freezing point in a form often more dangerous than previously. Hence, a long-lasting and sure effect cannot be warranted by this method.

The most generally used anti-skid chemical is, by virtue of its cheapness, the rock salt. Because of its moderate water solubility (somewhat above 300 g/l), it is usually strewn onto the surface in solid state, from time to time mixed with sand. Its "thrift", however, resulting in its widespread acceptance in practice, is misleading since the complex economic evaluation leads to an opposite inference. The Cl⁻ ions of the rock salt (and that of the alkaline-earth metal chlorides also in use) act, as generally known, as pitting corrosion activators, heavily damaging the iron and steel elements of bridges and overpasses, decreasing their lifetime. In addition to the direct damages taking their origin therein (e.g. in connection with the reinstatement) are the indirect damages, lying in the impediment in traffic, also considerable. The very same goes for the damages of the gas and water culverts owing to the corrosion as well. The rate of the corrosion activated by the Cl⁻ ions increases if the metallic elements embedded in the soil are exposed to stray current in the vicinity of D.C. electric traction. The peculiarity of the Cl⁻ ions' corrosive effect entailing pittings is especially harmful also on account of the autocatalytic acceleration of this process owing to the Cl⁻ ions' continuous accumulation at the corrosion faults, i.e. in the pits. Moreover, the Cl⁻ ions are stable, no chemical-biological effects can lead to their decomposition, so that they abide on the metal surface up to its full destruction.

The electrolytes, chiefly their anions - although in different degree - exert corrosive-erosive effects on the concrete as well. It is the tricalcium-aluminate among the cement forming minerals that is liable to constitute quaternary hydrates in the presence of water and different anions according to the general formula: 3CaO.Al₂O₃.3CaX.32H₂O, where X denotes either a bivalent anion, or two monovalent ones. The molar volume of these quaternary hydrates coming into being subsequently is much bigger than that of the origial hydrate so that a very great tensile strength arises in the course of the crystallization leading to bursting and mouldering of the concrete.

In addition to the corrosion-erosion effects, the sodification of the soil due to the Na⁺ ions is also a disadvantageous process, damaging directly the vegetal life, indirectly, however, the human and animal one. As known, this damage, beside the said corrosion-erosion effect, excludes the use of sea-water for irrigation. Hence, the de-icing with rock salt, serving the safety of the transport and the protection of the human life on the one hand, is imperiling it in the treated indirect way on the other.

From technical viewpoint a further drawback of applying rock salt lies in the lack for quick, instantaneous action often required e.g. when railway switches' de-icing. The rock salt, as the chemicals in general, exerts its "thawing" effect (in fact, inherent in heat transference promotion from the environment) by decrease in freezing point of the solution, even under the ambient temperature, when dissolved in water. This leads to the coaling down of the produced liquid in consequence of the heat requirement of the thawing along with the heat transference from the less cold environment by bringing about its driving force ensuring Δt. This mechanism, however, is slower than it would be with use of liquid thawing chemicals (on account of the rate determining role of the liquid formation) since the rock salt dissolution rate is considerably decreasing on decrease in temperature although its solubility (i.e. saturation point) is practically independent thereof. The slow action would upset the de-icing of switches as well as of other objects whenever the contact times is, for constructional reasons, short. When strewing solid rock salt, the uniform portioning out and distribution is much more circumstantial than when liquids' spraying out. Although machines enabling uniform and from the driving compartment regulable salt strewing are known and available, their skyrocketing expenses make the technologies "cheapness" upon rock salt basis obviously challengeable all the more so because for the thawing liquids' spraying out in winter the summer water-cars are also suitable.

The elaboration of the liquid proper to the object treated was given the impetus by the urgent need to the solution of the problems treated in the foregoing, in practice, however, basic to raw materials available in a large quantity.

According to the state of art patents have became known which tend to reduce the damages due to the corrosion by use of inhibitors, to prevent the sodification by chemicals not containing Na⁺ ions, to accelerate the action, however, by sprinkling out agents in liquid state. The liquids, suggested for this latter process by the known patents have been mostly the very ones that could already find use in other devices, e.g. in cooling systems of internal combustion engines or that happened to be introduced in practice in connection with them. Liquids of this kind are the ethylene-glycol containing makes in use under different trade names and their solutions respectively.

Aqueous solution of urea in different concentrations has been suggested by the French patent No. 838,638 (1938), from time to time in combination with rock salt or sodium-hydrocarbonate in order to decrease in feezing point. According to the data given in the patent specification, the urea in itself ensures a freezing point of -10, in combination with the said electrolytes that of -20°C. An obvious advantage of the make lies in the liquid state in comparison with the solid urea strewing out (this solution occurs in practice for the time being as well), but it is disadvantageous that the pure urea can be used by about -8°C to the most and its action is slow even in dissolved state. Besides, since it does not dissociate in aqueous solution (it is no electrolyte), to dissolve identic ice quantity, its double portion is needed in identic percentile concentration compared to the dissociating rock salt of nearly same molecular mass. Even if these drawbacks are reduced when combining with the electrolytes suggested, the advantage of going without Na⁺ ions is lost and, by the same token, doing with rock salt, the Cl⁻ ions treated drawbacks are not avoided either.

The specification of USP No. 2,233,185 (1938) describes as frost-resistant liquid the solution composed of formate, acetate, propionate and butyrate salts of alkali metals and their combination respectively in a pH range of 8-9 ensuring it by alkali-borate and phosphate buffer salt additives. As inhibitor and anti-foam additives, different emulsifying mineral oil derivatives are prescribed according to the said patent specification. This solution, on account of the limited availability of the chemicals needed, could not find widespread acceptance in practice in the course of more than half a century elapsed although it exhibits several important technical advantages that could manage to meet the requirements listed above.

An aqueous solution of sodium acetate is used, according to the British patent No. 561,253 (1944) combined with sodium-chromate inhibitor. In this way the treated drawback of the Na⁺ ions is obviously not eliminated and, in addition, the method could not be authorized because of the health hazard effect of the chromate ions. The technical effect is not satisfactory either, since the authors warrant a temperature range to -8°C only.

As frost resistant de-icing liquid the aqueous solution of urea and ammonium-chloride has been described in the British patent No. 1,387,810 (1975), from time to time with formamide as further component. With this combination -16 and -18°C has been attained respectively. Beside the obvious advantage of the solution, the problem, of not having done away with the Cl⁻ ions' drawbacks treated, survives.

A liquid serving for heat transference and isopiestic drying is described in the specification of USP No. 4,689,165 (1985) operating with aqueous ammonium-nitrate solution in a wide concentration range and admixing occasionally urea and/or formamide and/or dimethyl-formamide as well as ethylene-glycol thereto, using tiocarbamide, alkyl-polyglycol-ester, hexamethylene-tetramine and the mixture thereof respectively as corrosion inhibitors. This liquid cannot be recommended as de-icing medium for public areas because of the health hazard of some components therein. On the other hand, the patent does not supply with instructions for the ammonium-nitrate - urea quantity ratio and for their total concentration either that could ensure the advantages of the technical solution according to the present invention.

It has been a widely known effort for a long time to use for de-icing some, for other purposes hardly utilizable by-products in the chemical (e.g. sugar and pharmaceutical) industry, although these efforts are restricted by the rigorous hygienic regulations, by the insufficient reproducibility of the by-products and by their in time and space fluctuating supply. Though the CaCl₂, solution produced by neutralizing the waste hydrochloric acid arising from the chlorination in the organic chemical industry with limestone and/or slaked lime is of perfect ice thawing effect and the Ca⁺⁺ cations are, far from sodificating, soil components, the use of CaCl₂ does not do away with the disadvantages of the Cl⁻ ions and the hardly controllable origin of the waste hydrochloric acid runs the risk of environment pollution.

Mainly for de-icing of airport runways and plane surfaces a number of ethylene-glycol containing liquids has been put in circulation sprinkled out usually in aqueous solution blended occasionally with urea and mostly with various inhibitors. The toxicity of the glycol and the hazard inherent in its getting into the sweet water and thereby into the water of consumption comes step by step into the fore due to the more and more exigent hygienic and ecologic regulations. For this reason, the anti-skid measures without glycol are of urgent need and the question of the day.

### Disclosure of the invention

It has been found as the recognition serving as basis for completion of the task set is inherent in the inference that in order to do away with the slipperiness, the combination of environmentally safe, moreover beneficial fertilizers is advantageous that, in compliance with their destination, having fulfilled the ice dissolving effect, will be infiltrated as cell-forming nutrient into the vegetal organism in the course of autotrophic assimilation process (biodegradation). Hence, the chemicals, with persisting anti-skid action, can exert only an ad interim effect on the environment and, consequently, the treated problem arising from the accumulation of the electrolytes' ions (first of all Cl⁻) becomes eliminated. As the urea and ammonium-nitrate, applied in the treated compositions too, when being mixed with water in definite ratio, result in a known ternary system that both the urea - water and the ammonim-nitrate - water ratio surpasses several times the ratio which corresponds to the said compounds' solubility in, it was a further inference serving as basis to the inventive concept, that the treated advantages of the liquid state can be exploited without considerable decrease in ice dissolving, i.e. water absorbing capacity of the solute due to the presence of water in the original liquid (a fundamental difference in comparison to the saturated NaCI solution). Hence, approximately the same ice dissolving capacity can be attained in liquid state by means of the ternary composition, that could be ensured by the chemicals free of water, but of course, with much quicker action, due to the liquid state.

It has been clarified experimentally that (from the viewpoint treated in the following) the most advantageous composition of the make can be attained at the 5:4:7 water - urea - ammonium-nitrate mass ratio at which the thermodynamic freezing point of the mixture is -18°C. At this temperature, however, it is the separation not of the water, but of the chemicals that begins, thereby the liquid is diluted and its freezing point decreases to -28°C attainable at the 8:4:7 mass ratio. At the same time, this indicates, that the freezing point, in the course of the ice dissolution, is decreasing, diametrically opposed to the other de-icing compositions treated and, consequently, the driving force and the rate of the further ice-dissolving process is increasing. The liquid, having attained the eutectic composition at -28°C, is further diluted owing to the further ice-dissolution and attains the original freezing point of -18°C at 16,5:4:7 ratio. Consequently, the liquid of 31% water content at 5:4:7 ratio can be diluted as far as 60% water content without elevating its original freezing point i.e. without reducing its frost resistance (what is even more, the latter increases between the limits treated). All this entails the surprising fact, that the rate of the ice-dissolution is high not only because of using liquid composition, but also because the action is even intensified on dilution in the treated 30-60% water content range. This advantage, not yet attained previously, can be attributed to the following three fundamental reasons.
1. Upon dilution there is a speedy increase in the frost resistance as far as the eutectic ratio of 8:4:7 attached to -28°C i.e. a decrease in the freezing point from the original -18°C to -28°C and the original freezing point can be attained by further dilution only at 60% water content again. Upon increase in the difference between the ambient temperature and the freezing point, there is an increase in the driving force and in the rate of the heat absorption (heat transport) from the ambience as well.
2. The greater Δt is attached to a gradually diminishing density and viscosity, i.e. augmenting fluidity due to the increase in the water content, thereby the convective heat transport is also increasing and so is the rate of the ice dissolution for kinetic reasons.
3. The formation of the ternary liquid of 5:4:7 ratio according to the invention is highly endothermic and, consequently, entails a considerable heat removal from the ambience. Numerically: blending one kg chemicals' mixture of 4:7 mass ratio with the prescribed 0,455 kg water entails 163 kJ heat absorption, i.e. heat accumulation. Consequently, this heat of liquid formation is not to be removed from the ambience for ice dissolution any longer, opposed to the traditional processes with chemicals, Hence, in the final analysis, the heat, absorbed and accumulated from the ambience previously (viz. when manufacturing the liquid), is utilized for de-icing, contributing also to the intensification of the ice dissolution.

In this specification the expressions "dissolution of the chemicals" as well as "solution of chemicals" has been avoided consciously, because at the 5:4:7 ratio the structure of the liquid stands, from scientific viewpoint, closer to the fusions than to the traditional solutions, the laws of the latters (e.g. Raoult's law) do not even approximately apply to it and the structure of the traditionally conceived solutions that the water plays the role of the solvent in is gradually approached only by the dilution due to the ice dissolution. Making allowance for the said endothermic liquid formation, the liquid according to the invention is, as a matter of fact, a theoretic "ice solution".

The treated 5:4:7 mass ratio of the ternary system according to the invention stands near to the 25:6:8 molar ratio (regardless of the dissociation of the ammonium-nitrate, which is, however, restricted on extreme conditions). Hence, the peculiar effects treated are reminiscent of the law of multiple ratio by weight known in the classic chemistry, in virtue of which the mole proportions that can be expressed by relatively small whole numbers define chemical bonds or compounds, leading to abrupt changes in the properties. This inference is supported also by the observation that a significant departure from the given ratio (e.g. surpassing the mass ratio of the components by ± 10%) would entail considerable and from viewpoint of the inventive object disadvantageous alterations in properties. If e.g. the urea - ammonium-nitrate ratio is changing beyond the said range, the heat of liquid formation (heat requirement of the blending) diminishes considerably and so does the heat accumulation and the rate of action, which is an important need first of all for railway switches and for other objects that the liquid trickles down quickly on from the surface to be de-iced. If the water content of the liquid is augmented beyond the said toleration limit, i.e. it is diluted, the specific ice dissolving capacity is diminished without noticeable increase in heat absorption from the ambience, i.e. heat accumulation. If, on the other hand, the water concentration of the liquid is diminished, i.e. it is concentrated, its frost resistance and thereby its transportability and applicability is restricted in return for slight increase in ice dissolving capacity and specific heat accumulation. Allowing for all these, both from theoretical and technical viewpoint seems reasonable that the liquid is characterized in that the water-urea-ammonium-nitrate mass ratio varies in the range in:
(4.5-5.5) : (3.6-4.4) : (6.3-7.7)

A further advantage of the liquid according to the invention lies in combination of the speedy action with considerable and long-lasting ice dissolving and anti-skid effect. The operation with chemicals is applied for techno-economic reasons always after the mechanic removal of the snow layer and even then not up to the complete dissolution of the surface ice film or layer but up to its loosing up to such an extent that enables the mechanic removal of the adhering ice-and snow slush (scooping, sweeping). The use of the rock salt, in addition to its drawbacks treated, is problematic also because the salt, strewn onto the surface, is consumed to the thawing of the ice particles on the surface and not to that adhering to the concrete or asphalt liable first of all for the slipperiness. Opposed to this, the liquid according to the invention gets instantaneously through the fissures of the ice layer to the adhering film and, dissolving it, quickly makes the ice separable, removable from the surface. This mechanism leads to a moderate chemicals' requirement to about 50-100 g/m² depending on the temperature and the thickness of the crusty ice, since sprinkling out this liquid quantity, the crust becomes easily removable. On the other hand, as observed, the combination of the liquid with sand can be left undone which is from economic and operational aspect advantageous not only at the strewing but also at the subsequent cleaning of the road since the sand removal operation can be saved. The long-lasting protection which persists even without sand strewing during several hours can be attributed to the hygroscopic and adhering properties of the mixture that ensures the surface humidity of the pavement and pathway during several hours, providing a sure protection especially against the renewing sleet and icy rain. As known, the icy drizzling, on account of the poor observability, results in road surfaces accidence hazardous in an increased degree against which the sand strewing provides, although conspicuous, but not satisfactory protection.

The aforesaid chemicals' decomposition (biodegradation) proceeding during 2 weeks at least and during 4 weeks to the most depending on the ambient temperature is advantageous from technical and ecological viewpoint alike since the harmful residues e.g. on the metal surface cannot be accumulated, in fact, opposed to the Cl⁻ ion, are gradually diluting up to the complete disappearance adequately to one of the main subject matters of the invention. This is an important result also as far as the degree of the environment hazard due to the corrosion is concerned.

It has been pointed out by systematic comparative standardized tests that the liquid according to the invention is less damaging for the usual metallic (mainly iron and steel) elements, than the known other liquids representing the present state of the art when using also the inhibitor additives to be described in the following. The details of these tests can be omitted because the corrosion standards prescribe an immersion (inundation) method not modelling the actual, practical use enabling the treated biodegradation. Hence, the comparative inundation tests e.g. of 6-8 months (otherwise pointing out the advantages of the liquid even from the viewpoint of corrosion) are, as a matter of fact,not authoritative, because, as treated, a contact longer than one month between the components of the liquid and the metallic elements embedded in the earth cannot come into being.

Nevertheless - as found experimentally - an effective protection for the metallic elements can be attained even during the intermediate contact period if 1,5-2,0 mass per cent benzoic-acid and 0,10-0,25 mass per cent benzo-or tolyl triazol is admixed to the ternary mixture, as corrosition inhibitor.

Although the treated instructions give the necessary knowledge for experts to get ready and to use the liquid according to the invention, its closer study can be facilitated by the following examples as well.

### Best mode for carrying out the invention

### Manufacturing on raw materials' basis

In order to produce one ton of the make, 305,3 kg water is fed into a mixing reactor, thereafter 246 kg urea and 430,8 kg ammonium-nitrate is to be admixed. It is necessary to admix the two fertilizer components along with one another, because otherwise the ammonium-nitrate would not liquefy in water. During the agitation of the mixture, 16,0 kg benzoic-acid and 1,9 kg tolyl triazol is also to be admixed. If no waste heat is available to pre-heat the water or to heat the mixture e.g. in duplicator, the latter is turning cold (under 0°C) then, after a longer period, it is approaching the ambient temperature. This entails no drawback except the slowing down of the liquefying.

The pH of the liquid so produced is 7,0-7,5 to its control the exactitude of the decimal pH strips (after previous test with glass electrode) is satisfactory. If required, correction can be done with some ammonia or nitric acid. The density of the mixture so produced is 1,26 g/cm³, its thermodynamic freezing point (i.e. the temperature of the onset turbidity upon cooling) is -18°C. In winter, if no waste heat is available for the warming, it is practical to dissolve the inhibitors first and to admix the fundamental components therafter.

### Manufacturing on liquid nitrogen-fertilizer's basis

The fundamental components of the liquid according to the invention are identic with that of liquid nitrogen-fertilizer, but, due to their different destination, with different composition. Since, however, the production of the solid raw-materials by evaporation, then their re-dissolution (with considerable heat requirement) is not a reasonable way, in spite of the omission of the water transport either, if liquid nitrogen-fertilizer is available, it is practical to use it as intermediary, intensifying the production depending on its composition.

One of the known liquid fertilizer variables contains per ton 300 kg water, 300 kg urea and 400 kg ammonium-nitrate and, accordingly, by both fertilizer components 140, altogether 280 kg nitrogen has been admixed. To one ton of this, under stirring, 125 kg ammonium-nitrate and 75 litres water is to be fed. Into the latter 19,5 kg benzoic-acid and 2,3 kg tolyl-triazol has been dissolved previously. In this way 1221,8 kg make according to the invention is produced, the properties of which are identic with that in the former example. The control and correction of the pH, if needed, is done as described.

### Industrial Applicability

In conclusion, the advantages of the environment-saving snow-and ice thawing liquid according to the invention, opposed to the known agents applied previously are its applicability by virtue of its speedy action to de-icing of surfaces that very short contact-time can be ensured on because of the speedy trickling down (e.g. railway switches), at the same time it provides long-lasting protection against renewed icy drizzling, it exerts no sodifying effect, its corrosivity is moderate and even this comes in a few weeks to an end, while the acting components of the liquid are becoming profitable as plant nutrients.

## Claims

1. Environment saving, glycol-free snow-and ice dissolving liquid, as de-icing and antiskid agent mainly for public-roads, railway switches, airport runways, applying liquid nitrogen-fertilizer components characterized in that the water - urea - ammonium-nitrate mass ratio varies in the range of (4.5-5.5) : (3.6-4.4): (6.3-7.7).

2. Liquid according to claim 1, characterized in that it contains as corrosion inhibitor at least one of 1,5-2.0 mass per cent benzoic-acid and 0,10-0,25 mass per cent benzo-or tolyl triazol.

## Patentansprüche

1. Umweltfreundliche, glykolfreie Flüssigkeit zum Auflösen von Eis und Schnee als Enteisungs- und rutschhemmendes Mittel hauptsächlich für öffentliche Straßen, Eisenbahnweichen, Start- und Landebahnen von Flughäfen durch Aufbringen flüssiger Stickstoffdüngerkomponenten, dadurch gekennzeichnet, daß das Masseverhältnis von Wasser - Harnstoff - Ammoniumnitrat im Bereich von (4,5 - 5,5) : (3,6 - 4,4) : (6,3 - 7,7) schwankt.

2. Flüssigkeit nach Anspruch 1, dadurch gekennzeichnet, daß sie mindestens 1,5 bis 2,0 Masse-% Benzoesäure und 0,10 bis 0,25 Masse-% Benzoe- oder Tolyltriazol als Korrosionshemmer enthält.

## Revendications

1. Liquide non polluant, exempt de glycol, dissolvant la neige et la glace comme agent dégivrant et antidérapant essentiellement pour les voies de communication, les aiguillages de chemin de fer, les pistes d'aéroport, par application de composés liquides d'engrais azoté caractérisé en ce que le rapport de masses d'eau-urée-ammonium-nitrate varie dans le domaine de (4,5-5,5) : (3,6-4,4) : (6,3-7,7).

2. Liquide selon la revendication 1 caractérisé en ce qu'il contient en tant qu'inhibiteur de corrosion au moins un de 1,5-2,0 masse pour cent d'acide benzoïque et 0,10-0,25 masse pour cent de benzo ou tolyl triazole.
